# EUROPÄISCHE PATENTANMELDUNG

(11) **EP 2 144 069 A2**
(43) Veröffentlichungstag der Anmeldung: **13.01.2010**
(21) Anmeldenummer: 09159844.1
(22) Anmeldetag: 11.05.2009
(51) Int. Cl.: G01P 3/36, G01S 13/50, G01S 17/58

(54) **Verfahren und Vorrichtung zum Bestimmen einer Geschwindigkeit eines Objekts**

(30) Priorität: 08.07.2008 DE 102008040248
(71) Anmelder: ROBERT BOSCH GMBH, 70442 Stuttgart (DE)
(72) Erfinder: Matthias, Karl, 76275, Ettlingen (DE)

(57) **Zusammenfassung**

Die Erfindung betrifft eine Vorrichtung zum Bestimmen einer Geschwindigkeit eines Objekts mit: einer Empfangseinrichtung (6) zum Empfangen eines von einem Objekt ausgesandten oder reflektierten Pulses, der eine charakteristische Signalfolge aufweist; einer Signalverarbeitungseinrichtung (16) zum Bereitstellen von transformierten Signalfolgen für verschiedene Geschwindigkeiten, die aus der charakteristischen Signalfolge durch Transformieren deren Zeitachse gemäß einer Dopplerverschiebung für die Geschwindigkeit ermittelt werden; einer Datenverarbeitungseinrichtung (17) zum Bestimmen der Geschwindigkeit des Objekts basierend auf einer Korrelation des empfangenen Pulses und den transformierten Signalfolgen.

## Beschreibung

### STAND DER TECHNIK

Die vorliegende Erfindung betrifft ein Verfahren und Vorrichtung zum Bestimmen einer Geschwindigkeit eines Objekts.

Eine der Erfindung zugrunde liegende Problematik wird beispielhaft anhand einer Ultraschall-Fahrzeugumfelddetektion erläutert.

DE 198 02 724 A1 beschreibt eine Sendeeinrichtung, die ein mit einer charakteristischen Signalform moduliertes Trägersignal aussendet. Das Signal wird an einem Objekt reflektiert. Eine Empfangseinrichtung detektiert den Empfang des reflektierten Signals und bestimmt die Zeitspanne zwischen dem Aussenden und Empfangen. Der Abstand zu dem Objekt wird unter Berücksichtigung der Schallgeschwindigkeit bestimmt.

Eine Aktualisierung des Abstandes ist durch notwendige Sendepausen zwischen den Signalen begrenzt. Die Sendepausen sind typischerweise 30 ms lang. Eine Bestimmung der Position des Objekts während der Sendepause kann durch Extrapolation der Bewegung des Objekts erfolgen. Hierbei ergeben sich jedoch erhebliche Ungenauigkeiten in der Bestimmung der Geschwindigkeit, insbesondere weil eine Zuordnung von reflektierenden Punkten zu Echos fehlerhaft sein kann.

### OFFENBARUNG DER ERFINDUNG

Die vorliegende Erfindung betrifft ein Verfahren zum Bestimmen einer Geschwindigkeit mit den Schritten:
Empfangen eines von einem Objekt ausgesandten oder reflektierten Pulses, der eine charakteristische Signalfolge aufweist;
Bereitstellen von transformierten Signalfolgen für verschiedene Geschwindigkeiten, die aus der charakteristischen Signalfolge durch Transformieren deren Zeitachse gemäß einer Dopplerverschiebung für die Geschwindigkeit ermittelt werden;
Bestimmen der Geschwindigkeit des Objekts basierend auf einer Korrelation des empfangenen Pulses und den transformierten Signalfolgen.

Ein weiterer Aspekt der Erfindung betrifft eine Vorrichtung zum Bestimmen einer Geschwindigkeit eines Objekts mit:
einer Empfangseinrichtung zum Empfangen eines von einem Objekt ausgesandten oder reflektierten Pulses, der eine charakteristische Signalfolge aufweist;
einer Signalverarbeitungseinrichtung zum Bereitstellen von transformierten Signalfolgen für verschiedene Geschwindigkeiten, die aus der charakteristischen Signalfolge durch Transformieren deren Zeitachse gemäß einer Dopplerverschiebung für die Geschwindigkeit ermittelt werden;
einer Datenverarbeitungseinrichtung zum Bestimmen der Geschwindigkeit des Objekts basierend auf einer Korrelation des empfangenen Pulses und den transformierten Signalfolgen.

Die Bestimmung der Geschwindigkeit wird unmittelbar aus den Signalfolgen bestimmt. Hierfür bedarf es keiner Annahmen an die Umgebung, die Anzahl und Position der Objekte etc, die Verlässlichkeit der Bestimmung reduzieren könnten.

### KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:
- Fig. 1: eine Ausführungsform einer Vorrichtung zum Bestimmen eines Abstandes zu einem Objekt
- Fig. 2: eine Ultraschallpulsfolge;
- Fig. 3: beispielhafte transformierte Signalfolgen; und
- Fig. 4: eine Signalverarbeitungseinrichtung für die Ausführungsform von Fig. 1.

### AUSFÜHRUNGSFORMEN DER ERFINDUNG

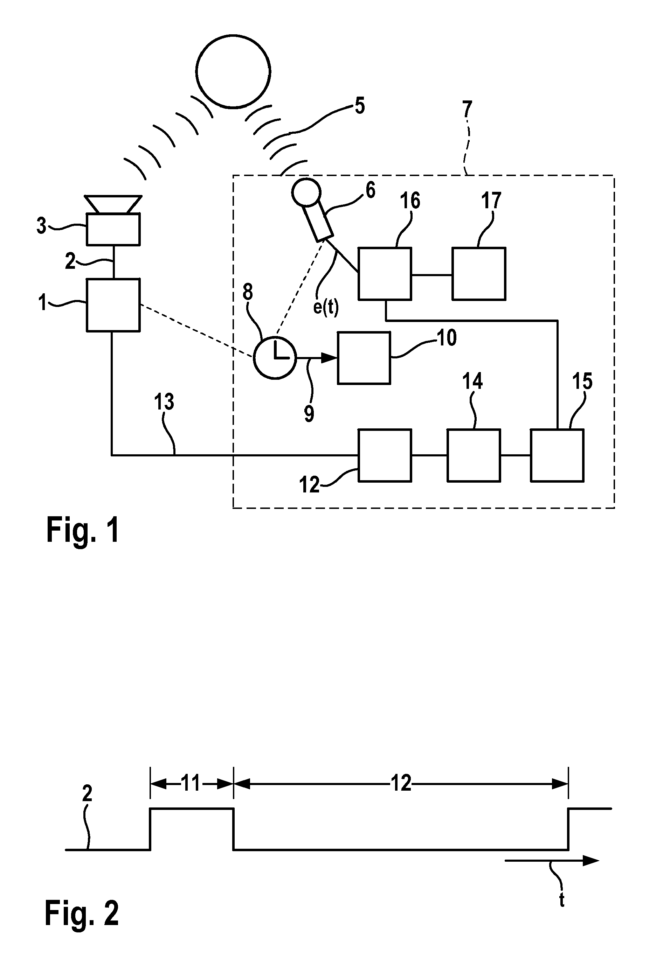

Fig. 1 zeigt eine erste Ausführungsform einer Vorrichtung zum Bestimmen der Geschwindigkeit.

Ein Sender 1 erzeugt ein Ultraschallsignal 2. Das Ultraschallsignal 2 wird durch einen Lautsprecher 3 ausgegeben. An einem Objekt 4 kann das Ultraschallsignal 2 reflektiert werden. Das reflektierte Signal 5, auch als Echo bezeichnet, wird von einem Mikrophon 6 eines Empfängers 7 empfangen.

Der Sender 1 startet einen Zeitnehmer 8, wenn er das Ultraschallsignal 2 aussendet. Der Empfänger 7 stoppt den Zeitnehmer 8, wenn er ein Echo empfängt oder veranlasst den Zeitnehmer 8 die vergangene Zeitspanne 9 auszugeben. Eine Auswertungseinrichtung 10 ermittelt aus der Zeitspanne und der Schallgeschwindigkeit den Abstand zu dem reflektierenden Objekt 4.

Das Ultraschallsignal 2 weist eine Pulsform mit einer festgelegten Dauer 11 auf (Fig. 2). Nach dem Aussenden des Ultraschallsignals 2 erfolgt eine Sendepause 12. Die Sendepause 12 kann deutlich länger, mehr als das Fünffache länger als die Dauer 11 des Ultraschallsignals 2 sein.

Die Dauer 11 des Ultraschallsignals 2 wird so bemessen, dass ein ausreichend starker Puls ausgesandt wird. Ausreichend stark ist der Puls, wenn sein Echo von allen Objekten innerhalb eines Erfassungsradius noch oberhalb einer Erfassungsschwelle des Empfängers 7 ist.

Die Sendepause 12 kann so bemessen werden, dass auch ein Echo von einem Objekt am Rand des Erfassungsradius noch innerhalb der Sendepause 12 bei dem Empfänger 7 eintrifft. Hierdurch ist gewährleistet, dass kein Überlapp eines Echos eines nahen Objekts mit einem Echo eines fernen Objekts von zwei aufeinanderfolgend ausgesandten Pulses auftritt.

Alternativ zu einer langen Sendepause 12 können die Ultraschallsignale 2 mit verschiedenen Signalfolgen codiert werden. Während der Zeitspanne innerhalb der die Echos von dem fernsten zu erfassenden Objekten ankommen, also der obigen Sendepause 12, werden die nacheinander ausgesendeten Ultraschallsignale 2 mit verschiedenen Signalfolgen codiert.

Die Signalfolgen können mittels eines Codemultiplexverfahrens auf den Ultraschallpuls aufgeprägt werden. Die charakteristische Pulsfolge 13 kann eine stochastische Codierung, orthogonale Codeworte, etc umfassen.

Auch bei Verwendung von Signalfolgen erweist es sich als zweckmäßig Sendepausen einzufügen, um eine Schallüberflutung zu vermeiden. Die Schallüberflutung tritt insbesondere dann auf, wenn ein Echo über viele verschiedene Wege z.B. aufgrund von Mehrfachreflexionen bei dem Empfänger ankommen kann. Ein weiterer Grund für eine Schallüberflutung können mehrere räumlich versetzte stark reflektierende Oberflächen sein. Die Trennschärfe der Filter, zur Unterscheidung der einzelnen Codeworte, kann dann erheblich absinken. Die Sendepausen senken die mittlere Schalldichte und erhöhen die Trennschärfe.

Die Aktualisierungsrate des Abstandes zu dem Objekt ist durch die notwendigen Sendepausen 12 vorgegeben. Die Bestimmung des Abstandes während der Sendepause 12 kann durch den bestimmten Abstand und eine bestimmte Geschwindigkeit des Objekts ermittelt werden. Eine entsprechende Datenverarbeitungseinrichtung ermittelt aus einer bestimmten Geschwindigkeit des Objekts und seinem letzten bekannten Abstand seinen momentanen Abstand.

Nachfolgend wird erläutert, wie aus den empfangenen Echos unmittelbar die Geschwindigkeit des Objekts bestimmt wird.

Auf das Ultraschallsignal 2 wird eine charakteristische Signalfolge 13 aufgeprägt. Dies kann beispielsweise durch ein Codemultiplexverfahren erfolgen. Als aufgeprägte Codeworte eigenen sich Pseudo-Zufallsfolgen. Andere Codeworte sind aus einer Gruppe von zueinander orthogonalen Codeworten ausgewählt, z.B. einem Walsh-Code.

Die verwendete charakteristische Signalfolge 13 kann in einem Speicher 12 gespeichert oder in sonstiger Weise der Empfangseinrichtung 7 bereitgestellt werden.

Die relative Geschwindigkeit zwischen dem reflektierenden Objekt und dem Empfänger prägt sich in eindeutiger Weise auf die empfangene Signalfolge auf. Bewegt sich das Objekt von dem Empfänger weg, ist die empfangene Signalfolge gegenüber der ursprünglich ausgesandten Signalfolge zeitlich gedehnt. Umgekehrt ist die empfangene Signalfolge gegenüber der ursprünglich ausgesandten Signalfolge zeitlich gestaucht, wenn sich das Objekt auf den Empfänger zubewegt. Dieser Effekt wird als Doppler-Effekt oder Dopplerverschiebung bezeichnet und tritt sowohl für Schallwellen als auch elektromagnetische Wellen auf.

Die Ausführungsform berücksichtigt die Dehnung und Stauchung der charakteristischen Signalfolge, um aus ihr die Geschwindigkeit des Objekts zu bestimmen.

Eine Transformationseinrichtung 14 wendet die Gesetzmäßigkeit der Dopplerverschiebung für verschiedene Geschwindigkeiten auf die charakteristische Signalfolge 13 an. Die sich ergebenden transformierten Signalfolgen c1, c2, c3 werden der Empfangseinrichtung 7 zusammen mit den zugehörigen Geschwindigkeiten bereitgestellt, z.B. in einem Speicher 15.

Die transformierten Signalfolgen c1, c2, c3 können dynamisch während des Betriebs der Empfangseinrichtung für die aktuell verwendeten charakteristischen Signalfolgen ermittelt werden oder vorab berechnet und in einem Speicher 15 abgelegt werden.

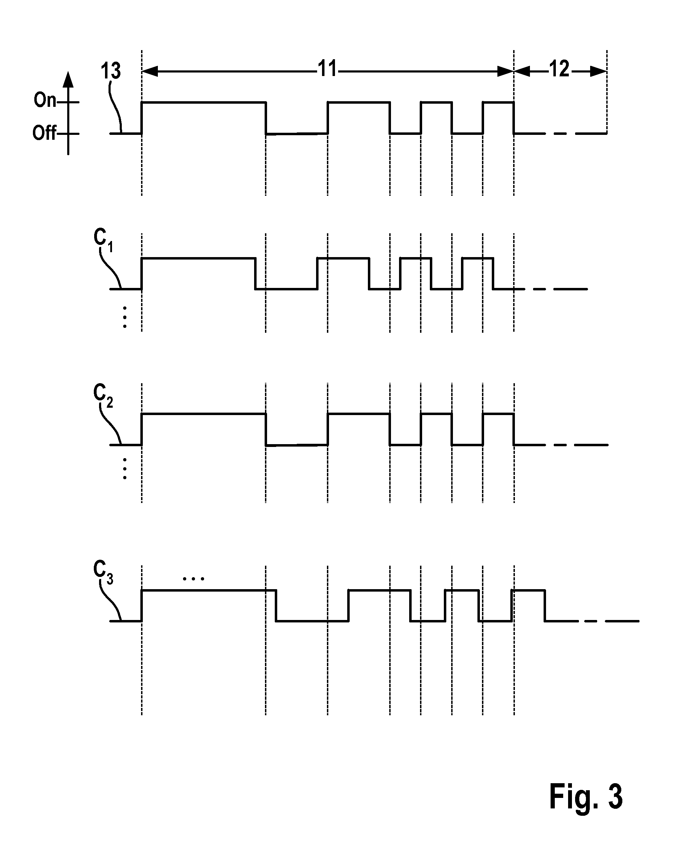

In Fig. 3 ist eine beispielhafte charakteristische Signalfolge 13 dargestellt. Eine erste transformierte Signalfolge c1 ist für eine erste (relative) Geschwindigkeit eines Objekts bestimmt, das sich auf den Empfänger zubewegt. Ein zweite transformierte Signalfolge c2 ist für eine Objekt bestimmt, das in konstantem Abstand zu dem Empfänger bleibt. Eine dritte transformierte Signalfolge c3 ist für ein Objekt bestimmt, das sich mit einer zweiten (relativen) Geschwindigkeit von dem Empfänger entfernt.

In der Empfangseinrichtung ist eine Signalverarbeitungseinrichtung 16 vorgesehen. Diese bestimmt die Korrelation des empfangenen Echos e(t) mit den bereitgestellten transformierten Signalfolgen c1, c2, c3.

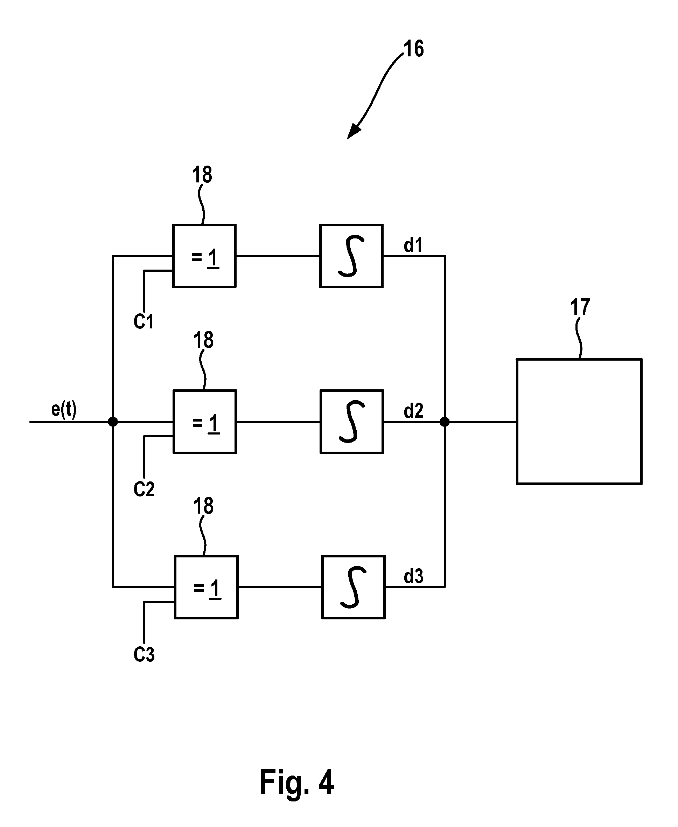

Fig. 4 zeigt das Funktionsprinzip der Signalverarbeitungseinrichtung 16 für einen Faltungscode anhand eines Blockdiagramms. Das empfangene Echo e(t) wird mit der ersten transformierten Signalfolge c1 in einem Binär-Addierer aufsummiert und über die Länge des Faltungscodes integriert. Der sich ergebende analoge Wert d1 ist ein Maß für die Übereinstimmung (Korrelationswert) des empfangenen Echos e(t) und der ersten transformierten Signalfolge c1. Das empfange Echo e(t) wird ebenfalls mit den anderen transformierten Signalfolgen korreliert, um deren Korrelationswert d2, d3 zu bestimmen.

Eine Datenverarbeitungseinrichtung 17 ermittelt eine nächstkommende Signalfolge aus den transformierten Signalfolgen c1, c2, c3, als die welche den höchsten Korrelationswert d1, d2, d3 mit dem empfangenen Echo e(t) aufweist. Die der nächstkommenden Signalfolge zugehörige Geschwindigkeit wird als die Geschwindigkeit des Objekts ausgegeben und das Überschreiten der Korrelationswerte kann zum Stoppen des Zeitnehmers 8 verwendet werden.

In einer anderen Ausgestaltung wird ein Mittelwert aus den zwei Geschwindigkeiten gebildet, deren jeweilige Signalfolgen die beiden höchsten Korrelationswerte aufweisen. Der Mittelwert wird als Geschwindigkeit des Objekts ausgegeben.

In einer anderen Ausgestaltung wird ein gewichteter Mittelwert aller Geschwindigkeiten ermittelt. Die Gewichtung für jede Geschwindigkeit ist eine Funktion des Korrelationswerts der zugehörigen transformierten Signalfolge und des empfangenen Echos.

Die Anzahl der bereitgestellten transformierten Signalfolgen kann in Abhängigkeit der gewünschten Auflösung der Geschwindigkeit festgelegt werden. Ferner können die Geschwindigkeiten und zugehörigen transformierten Signalfolgen anhand zu erwartenden Geschwindigkeiten ermittelt oder ausgewählt werden. Die erwarteten Geschwindigkeiten können unter Berücksichtigung der absoluten Geschwindigkeit des Empfängers ermittelt werden, d.h. der Geschwindigkeit des Kraftfahrzeuges.

Falls eine unveränderliche charakteristische Signalfolge verwendet wird, können die entsprechenden transformierten Signalfolgen in einer geeigneten Speichereinrichtung hinterlegt werden.

Die vorhergehenden Ausführungsformen verwenden Ultraschall als Trägerwelle. Andere Ausführungsformen können Radarwellen im GHz-Bereich, Infrarotes Licht oder Sichtbares Licht verwenden. Die Sende- und Empfangseinrichtungen sind entsprechend anzupassen. Codewörter oder sonstigen charakteristischen Signalfolgen und deren Transformierte werden wie bei den vorherigen Ausführungsformen beschrieben verwendet.

## Patentansprüche

1. Verfahren zum Bestimmen einer Geschwindigkeit eines Objekts mit den Schritten:
Empfangen eines von einem Objekt ausgesandten oder reflektierten Pulses, der eine charakteristische Signalfolge aufweist;
Bereitstellen von transformierten Signalfolgen für verschiedene Geschwindigkeiten, die aus der charakteristischen Signalfolge durch Transformieren deren Zeitachse gemäß einer Dopplerverschiebung für die Geschwindigkeit ermittelt werden;
Ermitteln einer Korrelation des empfangenen Pulses und den transformierten Signalfolgen; und
Bestimmen der Geschwindigkeit des Objekts basierend auf der ermittelten Korrelation.

2. Verfahren nach Anspruch 1, wobei die Geschwindigkeit des Objekts als die Geschwindigkeit bestimmt wird, deren zugehörige transformierte Signalfolge die höchste Korrelation mit dem empfangenen Puls aufweist.

3. Verfahren nach Anspruch 1, wobei die Geschwindigkeit des Objekts basierend auf einer Gewichtung der Korrelation der transformierten Signalfolgen mit dem empfangenen Puls bestimmt werden.

4. Verfahren nach einem der vorhergehenden Ansprüche, wobei zwei aufeinanderfolgende Pulse durch eine Pause separiert sind, die wenigstens ein Fünffaches der Dauer des Pulses beträgt.

5. Verfahren nach einem der vorhergehenden Ansprüche, wobei der charakteristischen Signalfolge ein Codewort mittels eines Codemultiplexverfahrens aufgeprägt wird.

6. Verfahren nach Anspruch 5, wobei das Codewort durch eine Pseudo-Zufallszahl generiert wird.

7. Verfahren nach Anspruch 5, wobei das Codewort aus einem orthogonalen Satz von Codewörtern ausgewählt wird.

8. Vorrichtung zum Bestimmen einer Geschwindigkeit eines Objekts mit:
einer Empfangseinrichtung (6) zum Empfangen eines von einem Objekt ausgesandten oder reflektierten Pulses, der eine charakteristische Signalfolge aufweist;
einer Signalverarbeitungseinrichtung (16) zum Bereitstellen von transformierten Signalfolgen für verschiedene Geschwindigkeiten, die aus der charakteristischen Signalfolge durch Transformieren deren Zeitachse gemäß einer Dopplerverschiebung für die Geschwindigkeit ermittelt werden;
einer Datenverarbeitungseinrichtung (17) zum Ermitteln einer Korrelation des empfangenen Pulses und den transformierten Signalfolgen und Bestimmen der Geschwindigkeit des Objekts basierend auf der Korrelation.
